(19) Europäisches Patentamt
European Patent Office
Office européen des brevets

(11) **EP 2 677 284 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(51) Int Cl.:
***G01F 1/84*** *(2006.01)*

(21) Anmeldenummer: **13001580.3**

(22) Anmeldetag: **27.03.2013**

(54) **Verfahren zum Betreiben eines Resonanzmesssystems und diesbezügliches Resonanzmesssystem**

Method for operating a resonance measuring system and corresponding resonance measuring system

Procédé de fonctionnement d'un système de mesure à résonance et système de mesure à résonance correspondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2012 DE 102012011934**

(43) Veröffentlichungstag der Anmeldung:
**25.12.2013 Patentblatt 2013/52**

(73) Patentinhaber: **Krohne Messtechnik GmbH 47058 Duisburg (DE)**

(72) Erfinder:
• **Kolahi, Kourosh**
  **47051 Duisburg (DE)**
• **Storm, Ralf**
  **45131 Essen (DE)**

(74) Vertreter: **Gesthuysen Patent- und Rechtsanwälte Patentanwälte Postfach 10 13 54 45013 Essen (DE)**

(56) Entgegenhaltungen:
WO-A1-2007/040468      DE-A1-102008 059 920
US-A1- 2007 119 263

**Beschreibung**

Die Erfindung betrifft ein Verfahren zur Einstellung des Arbeitspunktes eines als Coriolils-Massedurchflussmessgerät ausgebildeten Resonanzmesssystems, wobei das Resonanzmesssystem wenigstens eine elektrische Stelleinrichtung, wenigstens einen elektromagnetischen Antrieb als Schwingungserzeuger, wenigstens ein mit einem Medium wechselwirkendes Schwingelement umfasst, die elektrische Stelleinrichtung ein elektrisches Anregungssignal $u_2$ zur Anregung des elektromagnetischen Antriebs bereitstellt, der elektromagnetische Antrieb das Schwingelement zur Schwingung in wenigstens einer Eigenform anregt, wobei ein zumindest das Schwingelement abbildendes mathematisches Modell des Resonanzmesssystems aufgestellt wird und Parameter des mathematischen Modells durch geeignete Anregung des Schwingelements und Auswertung des mathematischen Modells identifiziert werden und die identifizierten Parameter und/oder davon abgeleitete Größen zur Einstellung des Arbeitspunktes des Resonanzmesssystems herangezogen werden.

Resonanzmesssysteme der vorgenannten Art sind seit vielen Jahren bekannt, nicht nur in Form von Coriolis-Massedurchflussmessgeräten, sondern auch als Dichtemessgeräte oder Füllstandwächter nach dem Stimmgabel-Prinzip, als Quarzwagen und Bandviskosimeter u.a.m. Diese Resonanzmesssysteme stehen mit einem Prozess/Prozessmedium in Verbindung, wobei sich Prozess und Prozessmedium und Resonanzmesssystem wechselseitig beeinflussen.

Im Folgenden werden Resonanzmesssysteme am Beispiel von Coriolis-Massedurchflussmessgeräten behandelt, was nicht einschränkend zu verstehen ist. Es spielt keine Rolle, ob es sich um Coriolis-Massedurchflussmessgeräte mit einem oder mehreren Messrohren, mit geraden oder gebogenen Messrohren handelt. Als Resonanzmesssysteme werden vorliegend ganz allgemein solche Systeme bezeichnet, bei denen Informationen über die zu bestimmenden Prozessgrößen (Messgrößen) in den Eigenfrequenzen verschlüsselt sind und/oder solche Systeme, bei denen Arbeitspunkte auf die Eigenfrequenzen des Messsystems gelegt werden. Auf alle unter diese Definition fallenden Systeme sind die nachfolgenden Ausführungen anwendbar. Bei Coriolis-Massedurchflussmessgeräten entspricht das Messrohr dem Schwingelement des Resonanzmesssystems; auch diese besondere Ausgestaltung des Schwingelements stellt keine Einschränkung für die allgemein auf Resonanzmesssysteme anwendbare Lehre dar.

Als Coriolis-Massedurchflussmessgeräte ausgebildete Resonanzmesssysteme werden vor allem in der industriellen Prozessmesstechnik dort eingesetzt, wo mit hoher Genauigkeit Masseströme bestimmt werden müssen. Die Funktionsweise von Coriolis-Massedurchflussmessgeräten beruht darauf, dass wenigstens ein von einem Medium durchströmtes Messrohr - das Schwingelement - von einem Schwingungserzeuger zu einer Schwingung angeregt wird, wobei dieser Schwingungserzeuger vorraussetzungsgemäß ein elektromagnetischer Antrieb ist. Bei einem solchen elektromagnetischen Antrieb wird üblicherweise eine Spule von einem elektrischen Strom durchflossen, wobei mit dem Spulenstrom unmittelbar eine Kraftwirkung auf das Schwingelement verbunden ist. Bei Coriolis-Massedurchflussmessgeräten beruht die Funktionsweise darauf, dass das massebehaftete Medium aufgrund der durch zwei orthogonale Bewegungen - die der Strömung und die des Messrohres - hervorgerufene Coriolis-Trägheitskraft auf die Wandung des Messrohres rückwirkt. Diese Rückwirkung des Mediums auf das Messrohr führt zu einer Änderung der Messrohrschwingung im Vergleich zu dem undurchströmten Schwingungszustand des Messrohres. Durch Erfassung dieser Besonderheiten der Schwingungen des durchströmten Coriolis-Messrohrs kann der Massedurchfluss durch das Messrohr mit hoher Genauigkeit bestimmt werden.

Von besonderer Bedeutung sind die Eigenfrequenzen des Coriolis-Massedurchflussmessgeräts bzw. der schwingfähigen Teile des Coriolis-Massedurchflussmessgeräts, im Wesentlichen also die Eigenfrequenzen des Messrohrs als Schwingelement, weil die Arbeitspunkte des Coriolis-Massedurchflussmessgerät üblicherweise auf Eigenfrequenzen des Messrohres gelegt werden, um die erforderlichen Schwingungen für die Induktion der Corioliskräfte mit einem minimalen Energieaufwand einprägen zu können. Die dann von dem Messrohr ausgeführten Schwingungen weisen eine bestimmte Form auf, die als Eigenform der jeweiligen Anregung bezeichnet wird. Ein weiterer Grund für die besondere Bedeutung von Eigenfrequenzen bei Coriolis-Massedurchflussmessgeräten ist die unmittelbare physikalische Verknüfung zwischen der Eigenfrequenz des durchströmten Messrohrs und der effektiv ausgelenkten Schwingmasse (Messrohr und Messe des Mediums im Messrohr); über diesen Zusammenhang kann die Dichte des Mediums bestimmt werden.

Aus dem Stand der Technik ist bekannt, dass zur Anregung des Schwingelements von einem Regler ein harmonisches Basissignal als Reglerausgangssignal in Form einer sinusförmigen Spannung erzeugt wird und diese sinusförmige Spannung die elektrische Stelleinrichtung ansteuert, wobei die elektrische Stelleinrichtung die Aufgabe hat, an ihrem Ausgang eine entsprechende Leistung zur Verfügung zu stellen, um den elektromagnetischen Antrieb in geeigneter Weise und mit ausreichender Leistung ansteuern zu können; die elektrische Stelleinrichtung ist damit praktisch das leistungsmäßige Bindeglied zwischen dem Regler und dem elektromagnetischen Antrieb des Resonanzmesssystems. Üblicherweise sind bekannte Coriolis-Massedurchflussmessgeräte auch mit einem Schwingungsaufnehmer ausgestattet, mit dem die Schwingung des Schwingelements erfasst wird, denn in der Schwingung des mit einem Medium wechselwirkenden Schwingelements liegt üblicherweise die interessierende physikalische Information über das Medium, beispielsweise der Durchfluss, Dichte und Viskosität.

Üblicherweise dient der Regler dazu, das Schwingelement in Resonanz zu betreiben, wozu ermittelt werden muss, ob Eingangs- und Ausgangsgröße des Schwingelements die der Resonanz entsprechende Phasendifferenz aufweisen. Im Falle des Coriolis-Massedurchflussmessgerätes ist dies eingangsseitig die Kraft, mit der das Messrohr als Schwingelement angeregt wird und ist dies ausgangsseitig die Geschwindigkeit des Messrohres. Aufgrund der diesem schwingfähigen System zugrunde liegenden Zusammenhänge liegt eine Resonanz dann vor, wenn die eingangsseitige Kraftwirkung und die ausgangsseitige Messrohrgeschwindigkeit eine Phasendifferenz $\Delta\varphi$ von 0° aufweisen. Ist diese Phasenbedingung erfüllt, liegt die gewünschte Resonanz vor. Aus diesem Grund ist der Regelkreis zum Betreiben eines aus dem Stand der Technik bekannten Resonanzmesssystems - jedenfalls auch - ein Phasenregelkreis.

Der "Betrieb eines Resonanzmesssystems" muss jedoch nicht nur den Standard-Anwendungsfall der Anregung des Schwingelements in der Resonanzfrequenz betreffen, vielmehr kann es auch gewünscht sein, das Schwingelement mit einer anderen Frequenz anzuregen, beispielsweise zur selektiven Parameteridentifikation, wie sie z. B. aus der DE 10 2008 059 920 A1 bekannt ist. Hier werden bestimme Eigenschaften des Schwingungsverhaltens des Resonanzmesssystems genutzt, um bei bestimmten eingeschwungenen Phasenlagen zwischen dem Anregungssignal und dem Reaktionssignal des Schwingelements besonders einfach bestimmte Parameter - im Idealfall nur einen Parameter - des Resonanzmesssystems identifizieren zu können. Es kann beispielsweise gewollt sein, das mathematische Modell des Resonanzmesssystems - im Regelfall also Übertragungsfunktionen für bestimmte modellierte und angeregte Eigenformen - nur für bestimmte eingeschwungene Phasen auszuwerten, beispielsweise für die Phasen -45°, 0° und +45°. Die zum Betrieb eines Resonanzmesssystems verwendeten mathematischen Modelle sind im Stand der Technik oft strukturmechanische Modelle des Schwingelements, die gleichungsmäßig zu Übertragungsfunktionen zweiter Ordnung führen und die das Schwingungsverhalten bestimmter angeregter Moden beschreiben, hierzu wird auch auf die DE 10 2005 013 770 A1 verwiesen.

Die Identifikation von Parametern des mathematischen Modells des Resonanzmesssystems und damit des Resonanzmesssystems selbst ist für verschiedene technische Anwendungszwecke von großem Interesse. Zum einen geben die für das physikalische Verhalten des Resonanzmesssystems relevanten Parameter, wie z. B. die Schwingmasse des Schwingelements, die Federsteifigkeit des Schwingelements und die Dämpfung des Schwingelements, einen Überblick über den Zustand des Resonanzmesssystems, so dass beispielsweise nach der Fertigstellung des Resonanzmesssystems ein Urteil darüber möglich ist, ob die Eigenschaften des gefertigten Resonanzmesssystems innerhalb bestimmter Toleranzen liegen (Qualitätssicherung). Die wiederholte Messung bzw. Ermittlung von Systemparametern mit Hilfe des mathematischen Modells kann im Betrieb/Einbauzustand auch dazu genutzt werden, eine Veränderung des Systemverhaltens des Resonanzmesssystems zu ermitteln, es kann auf mögliche Fehler und sich anbahnende Defekte geschlossen werden, so dass zum Betreiben eines Resonanzmesssystems auch beispielsweise die Diagnose gehört. Ein weiterer Anwendungsfall für die initiale und fortwährende Ermittlung bestimmter Systemparameter ist aber auch die Online-Korrektur der Messung durch Berücksichtigung der veränderten Parameter des Resonanzmesssystems in der Berechnung.

In allen genannten Betriebsfällen des Resonanzmesssystems hängt die Genauigkeit der Identifikation von Messparametern, der Berechnung des eigentlichen Messwertes und der Diagnose ganz wesentlich davon ab, wie genau der - auch jenseits des Resonanzpunktes liegende - Arbeitspunkt des Resonanzmesssystems bestimmt und eingestellt werden kann, wie genau also die Phase zwischen dem das Resonanzmesssystem auslenkenden Signals und dem Reaktionssignal ist. Im Falle eines Coriolis-Massedurchflussmessgerätes ist - wie zuvor bereits angedeutet - die auslenkende Größe die von dem Schwingungserzeuger auf das Schwingelement ausgeübte Kraft, und ist die Reaktionsgröße die Auslenkung des Messrohrs bzw. häufiger die erste zeitliche Ableitung der Auslenkung, also die Messrohrgeschwindigkeit. Im Resonanzfall ist die Phasendifferenz zwischen der auf das Messrohr einwirkenden Kraft und der Messrohrgeschwindigkeit $\Delta\varphi$ = 0°.

In der Praxis hat sich herausgestellt, dass das exakte Einregeln einer vorgegebenen Phasendifferenz zwischen der das Schwingelement anregenden Kraft und der interessierenden Reaktionsgröße des Schwingelements - im Falle eines Coriolis-Massedurchflussmessgeräts die Messrohrgeschwindigkeit - erhebliche Schwierigkeiten bereiten kann und zwar nicht nur bei transienten Vorgängen, wenn sich die Eigenfrequenz des Schwingelements beispielsweise bei variierenden Mediumdichten ändert, sondern auch bei stationären Zuständen des Resonanzmesssystems.

Aufgabe der vorliegenden Erfindung ist es, ein Verfahren zum Betreiben eines Resonanzmesssystems und ein Resonanzmesssystem anzugeben, mit dem ein gewünschter Betriebspunkt des Resonanzmesssystems mit höherer Präzision erzielt werden kann, so dass insgesamt auch eine präzisere Bestimmung von Systemparametern, eine präzisere Bestimmung von Messwerten und eine präzisere Diagnose des Resonanzmesssystems gelingt.

Die zuvor dargestellte und hergeleitete Aufgabe ist bei dem eingangs beschriebenen Verfahren zur Einstellung des Arbeitspunktes eines als Coriolis-Massedurchflussmessgerät ausgebildeten Resonanzmesssystems zunächst und im Wesentlichen dadurch gelöst, dass mit dem mathematischen Modell zumindest der elektromagnetische Antrieb und das mit dem Medium wechselwirkende Schwingelement abgebildet wird, dass der durch das elektrische Anregungssignal bewirkte Antrieb-Klemmenstrom $i_{DrA}$ und die durch das elektrische Anregungssignal bewirkte Antrieb-Klemmenspannung $u_{DrA}$ des elektromagnetischen Antriebs durch Messung erfasst werden und dass die Parameter des elektromagnetischen Antriebs und des Schwingelements zumindest teilweise durch Auswertung des mathematischen Modells mit dem erfassten Antrieb-Klemmenstrom $i_{DrA}$ und mit der erfassten Antrieb-Klemmenspannung $u_{DrA}$ des elektromagnetischen Antriebs identifiziert werden.

Der Erfindung liegt die Erkenntnis zugrunde, dass die für die hier betrachteten Resonanzmesssysteme interessierende Phase zwischen der Kraftanregung des Schwingelements und der Reaktionsgröße des Schwingelements, also der Auslenkung bzw. Auslenkungsgeschwindigkeit des Schwingelements, bei bekannten Verfahren nur mit unzureichender Genauigkeit erfasst wird, was insbesondere an einer mangelnden Berücksichtigung der Besonderheiten des elektromagnetischen Antriebs liegt, weshalb der elektromagnetische Antrieb erfindungsgemäß zwingend in das zum Betreiben des Resonanzmesssystems verwendete mathematische Modell aufgenommen wird.

Der Erfindung liegt insbesondere die Erkenntnis zugrunde, dass die im Stand der Technik häufig gemachte Annahme, dass die Phase der Kraftanregung des Schwingelements mit der Phase des in den elektromagnetischen Antrieb fließenden Stroms (Antrieb-Klemmenstrom) identisch ist, unzureichend und fehlerbehaftet ist, was häufig zu einer unpräzisen Regelung in den gewünschten Arbeitspunkt, zu ungenauen Parameterbestimmungen und zu einer unpräzisen Diagnose beim Betrieb des Resonanzmesssystems führt. Der durch die vorbeschriebene Annahme gemachte Fehler wirkt sich im Regelfall nicht so aus, dass ein Betrieb des Resonanzmesssystems grundsätzlich nicht möglich ist, aber die Abweichungen von der gewünschten Phasenlage können bei mehreren Grad liegen, was sich auf den Betrieb des Resonanzmesssystems negativ auswirkt.

Die Annahme, dass die auf das Schwingelement wirkende Kraft $F_m$ exakt in Phase ist mit dem in den elektromagnetischen Antrieb hineinfließenden Strom, also mit dem Antrieb-Klemmenstrom, ist häufig nicht erfüllt, beispielsweise bedingt durch Wirbelstromverluste im elektromagnetischen Antrieb selbst. Hinzu kommt beispielsweise bei spannungsgesteuerten Spannungsquellen als elektrische Stelleinrichtung für die Ansteuerung des Schwingungserzeugers, dass die Phasenlage des Antrieb-Klemmenstroms des elektromagnetischen Antriebs stark durch die induzierte Spannung an der Antriebsspule des elektromagnetischen Antriebs aufgrund der Schwingung des Schwingelements beeinflusst wird. Im Ergebnis ist deshalb erkannt worden, dass eine direkte Messung der Phasenlage der für die Auslenkung des Schwingelements verantwortlichen Kraft $F_m$ ohne Weiteres nicht möglich ist, da die Kraft $F_m$ als Messgröße nicht ohne größeren mestechnischen Aufwand zugänglich ist und die indirekte Bestimmung über den Antrieb-Klemmenstrom - ohne Berücksichtigung der physikalischen Eigenarten des elektromagnetischen Antriebs - unzureichend ist, weshalb erfindungsgemäß mit dem mathematischen Modell nicht nur das mit dem Medium wechselwirkende Schwingelement, sondern zumindest auch der elektromagnetische Antrieb abgebildet wird, wobei "abgebildet" im Sinne von "in dem mathematischen Modell gleichungsmäßig berücksichtigt" zu verstehen ist.

Um auf Grundlage des den elektromagnetischen Antrieb betreffenden Modellteils Rückschluss auf den internen und für die Kraftwirkung $F_m$ interessierenden Strom durch die Antriebsspule des elektromagnetischen Antriebs ziehen zu können, werden der durch das elektrische Anregungssignal bewirkte Antrieb-Klemmenstrom $i_{DrA}$ und die durch das elektrische Anregungssignal der elektrischen Stelleinrichtung bewirkte Antrieb-Klemmenspannung $u_{DrA}$ durch Messung erfasst, was messtechnisch sehr einfach möglich ist, beispielsweise durch direkten hochomigen Abgriff der Antrieb-Klemmenspannung $u_{DrA}$ und durch Abgriff der Spannung an einem dazu vorgesehen Shunt-Widerstand. Dadurch wird grundsätzlich die Möglichkeit geschaffen, dass die in das mathematische Modell eingeflossenen Parameter des elektromagnetischen Antriebs - und natürlich auch des Schwingelements - durch Auswertung des mathematischen Modells unter Verwendung der messtechnisch erfassten Antrieb-Klemmenspannung $u_{DrA}$ und des messtechnisch erfassten Antrieb-Klemmenstroms $i_{DrA}$ identifiziert werden können.

Eine bevorzugte Ausgestaltung des erfindungsgemäßen Verfahrens zeichnet sich dadurch aus, dass das mathematische Modell den elektromagnetischen Antrieb und das mit dem Medium wechselwirkende Schwingelement insgesamt als Last der elektrischen Stelleinrichtung abbildet, wobei die Last dem Verhältnis aus der Antrieb-Klemmenspannung $u_{DrA}$ und dem Antrieb-Klemmenstrom $i_{DrA}$ entspricht. Obwohl das Modell damit insgesamt die elektrischen Aspekte des elektromagnetischen Antriebs, die mechanischen Aspekte des Schwingelements wie auch die mechanischen Aspekte des Mediums - im Falle von Coriolis-Massedurchflussmessgeräten die strömungsmechanischen Aspekte des Mediums - berücksichtigt, erscheint das Modell aus Sicht der elektrischen Stelleinrichtung quasi als ein elektrisches Modell, wobei es vorteilhaft ist, das mathematische Modell des elektromagnetischen Antriebs und des mit dem Medium wechselwirkenden Schwingelements im Falle einer harmonischen Anregung als komplexwertiges Modell zu formulieren, da hier die Betrachtung und Untersuchung der Phasenlagen der unterschiedlichen Größen zueinander besonders einfach möglich ist.

Bei einer besonders bevorzugten Ausgestaltung des erfindungsgemäßen Verfahrens wird das mathematische Modell so eingerichtet, dass es als Parameter des elektromagnetischen Antriebs die Induktivität $L_S$ der von dem elektromagnetischen Antrieb umfassten Antriebsspule, den ohmschen Widerstand $R_S$ dieser Antriebsspule und vorzugsweise auch einen ohmschen Widerstand $R_W$ zur Nachbildung von Wirbelstromverlusten im elektromagnetischen Antrieb umfasst. Je nach verwendetem elektromagnetischen Antrieb sind die Wirbelstromverluste möglicherweise vernachlässigbar, so dass der ohmsche Widerstand $R_W$ entfällt ($R_W \rightarrow \infty$).

Als Parameter des Schwingelements weist das mathematische Modell vorzugsweise die effektive Schwingmasse m, die effektive Federsteifigkeit c und den effektiven Dämpfungskoeffizienten d auf. Unter der effektiven Schwingmasse m ist dabei die insgesamt schwingende Masse zu verstehen, die je nach Art des betrachteten Resonanzmesssystems nicht nur die Masse des Schwingelements selbst ist. Bei Coriolis-Massedurchflussmessgeräten ist die effektive Schwingmasse m die Masse des schwingenden Coriolis-Messrohres und der darin geführten Masse des Mediums, die ebenfalls ausgelenkt wird. Ähnliches gilt für die effektive Federsteifigkeit c, unter der im Falle eines Coriolis-Messrohres als Schwingelement die Federsteifigkeit des Messrohres oder der Messrohre und des Mediums zu verstehen ist. Gleiches gilt für den effektiven Dämpfungskoeffizienten, der im Falle eines Coriolis-Massedurchflussmessgeräts die Dämpfung der Messrohre selbst und die Dämpfung des Messmediums berücksichtigt, also die prozessbedingte Dämpfung. Bei Resonanzmesssystemen gehen die vorgenannten Parameter für das Schwingelement meist ein in eine Gleichung zweiter Ordnung, wobei verschiedene Formulierungen des mathematischen Modells für das Schwingelement möglich sind, wenn beispielsweise verschiedene Schwingungsmoden angeregt werden.

Damit das mathematische Modell aus Sicht der elektrischen Stelleinrichtungen als eine sich nicht nur aus dem Teil des elektromagnetischen Antriebs ableitende Last darstellt, ist auch eine Kopplung zwischen dem Modell des elektromagnetischen Antriebs und des Schwingelements vorgesehen. Im einfachsten Fall wird dazu ein Übertragungsbeiwert k eingeführt, der die Kopplung zwischen dem elektromagnetischen Antrieb und dem Schwingelement umfasst, wobei der Übertragungsbeiwert k dann vorzugsweise das Verhältnis zwischen der auf das Schwingelement wirkenden Kraft $F_m$ und dem Strom $i_L$ durch die die Induktivität $L_S$ aufweisenden Antriebsspule und/oder das Verhältnis zwischen der geschwindigkeitsproportionalen Induktionsspannung $u_{ind}$ an der Antriebsspule und der Geschwindigkeit v des Schwingelements angibt. Von Bedeutung ist hier, dass der Strom $i_L$ durch die Induktivität $L_S$ tatsächlich der Anteil des Stromes ist, der die Kraftwirkung auf das Schwingelement entfaltet, er muss keineswegs identisch sein oder in Phase liegen mit dem Antrieb-Klemmenstrom $i_{DrA}$.

Von besonderer Bedeutung ist auch die Berücksichtigung der Induktionsspannung $u_{ind}$, die das Rückwirken des sich bewegenden Schwingelements auf die Antriebsspule beschreibt, die Induktionsspannung ist damit praktisch eine durch die Bewegung des Schwingelements verursachte Spannungsquelle, wobei hier idealerweise von einer direkten Proportionalität zwischen der Geschwindigkeit v des Messrohres und der induzierten Spannung $u_{ind}$ ausgegangen werden kann. Das Verhältnis von der auf das Schwingelement wirkenden Kraft $F_m$ zu dem diese Kraft bewirkenden Strom $i_L$ durch die im Modell von ohmschen Einflüssen befreiten Spuleninduktivität $L_S$ entspricht dem Verhältnis der in der Antriebsspule induzierten Spannung $u_{ind}$ zu der diese induzierte Spannung verursachenden Geschwindigkeit v des Messrohrs, so dass hier idealerweise identische Übertragungsbeiwerte k vorliegen bzw. ein einziger Übertragungsbeiwert k vorliegt. Der Übertragungsbeiwert ist damit praktisch der zwischen dem mathematischen Modell des elektromagnetischen Antriebs und dem mathematischen Modell des Schwingelements vermittelnde Koppelfaktor.

In einer weiteren Ausgestaltung des erfindungsgemäßen Verfahrens wird zur Identifikation des ohmschen Widerstandes $R_S$ des elektromagnetischen Antriebs der elektromagnetische Antrieb mit einem Gleichsignal, also beispielsweise mit einer Gleichspannung, als elektrisches Anregungssignal $u_2$ beaufschlagt, so dass alle transienten Effekte unberücksichtigt bleiben können; der ohmsche Widerstand $R_S$ ergibt sich einfach aus dem Quotienten der Antrieb-Klemmenspannung $u_{DrA}$ und dem Antrieb-Klemmenstrom $i_{DrA}$.

Gemäß einer weiteren bevorzugten Ausgestaltung des Verfahrens wird zur Bestimmung des für die Wirbelstromverluste verantwortlichen ohmschen Widerstandes $R_W$ und der Induktivität $L_S$ der Antriebsspule der elektromagnetische Antrieb mit einem Wechselsignal mit einer Frequenz, die sehr viel kleiner als die Eigenfrequenz $\omega_0$ im Resonanzbetriebsfall ist, als elektrisches Anregungssignal beaufschlagt, wodurch der Einfluss der induzierten Spannung $u_{ind}$ vernachlässigt werden kann; der ohmsche Widerstand $R_S$ des elektromagnetischen Antriebs muss natürlich weiterhin berücksichtigt werden. Erfindungsgemäß ist vorgesehen, dass zumindest mit dem parametrierten mathematischen Modell für den elektromagnetischen Antrieb unter Verwendung des erfassten Antrieb-Klemmenstroms $i_{DrA}$ und der erfassten Antrieb-Klemmenspannung $u_{DrA}$ die induzierte Spannung $u_{ind}$ und der Strom $i_L$ zumindest hinsichtlich der Phase berechnet werden, womit zwei für den Betrieb eines Resonanzmesssystems bedeutsame Größen zur Verfügung stehen, insbesondere deshalb, weil der berechnete Spulenstrom $i_L$ in Zusammenhang steht mit der unmittelbaren Kraftwirkung $F_m$ und weil die berechnete induzierte Spannung $u_{ind}$ in direktem Zusammenhang steht mit der Auslenkungsgeschwindigkeit v des Schwingelements. Beide Größen zusammen geben einen vollständigen Überblick über den Betriebs- bzw. Bewegungszustand des Resonanzmesssystems.

Die Möglichkeit, den Strom $i_L$ durch die "Modellspule" zu berechnen, ist deshalb bemerkenswert, weil durch das Modell Effekte innerhalb des elektromagnetischen Antriebs berücksichtigt werden können, die eine Abweichung von dem Antrieb-Klemmenstrom $i_{DrA}$ bewirken, so dass zumindest eine genaue Vorstellung von der Phasenlage der von dem elektromagnetischen Antrieb auf das Schwingelement ausgeübten Kraft $F_m$ existiert und zwar mit sehr einfach zu realisierenden Mitteln. Damit ist praktisch ohne jeden zusätzlichen messtechnischen Aufwand eine Erfassung der Kraft $F_m$ möglich, also die Erfassung einer Größe, deren direkte Messung mit erheblichem Aufwand verbunden wäre.

Bemerkenswert ist weiterhin, dass durch die Berechnung der induzierten Spannung $u_{ind}$ ebenfalls eine sehr genaue Vorstellung von der Geschwindigkeit des Schwingelements besteht, insbesondere von der Phasenlage der Geschwindigkeit, was für den Betrieb des Resonanzmesssystems von vorrangiger Bedeutung ist; der Betrag der Geschwindigkeit ist für eine Phasenregelung von nicht allzu großer Bedeutung. Diese Information über die Geschwindigkeit des Schwingelements liegt vor, ohne dass dazu ein separater Aufnehmer für die Messrohrgeschwindigkeit bzw. die Messrohrauslenkung erforderlich wäre. Dies eröffnet viele Möglichkeiten für die neue Ausgestaltung von Resonanzmesssystemen - Verzicht auf Schwingungsaufnehmer - und für die zusätzliche Überwachung bekannter Resonanzmesssysteme mit Schwingungsaufnehmer, beispielsweise durch den Vergleich zweier unabhängig voneinander gewonnener Werte für die Geschwindigkeit des Schwingelements.

Da für viele Resonanzmesssysteme gerade die Phasendifferenz zwischen der auf den Schwingungsaufnehmer wirkenden Kraft $F_m$ und der daraus resultierenden Geschwindigkeit v des Schwingelements von Bedeutung ist, da sie ein direktes Maß für die Abweichung vom Resonanzpunkt ist, wird mit dem erfindungsgemäßen Verfahren vorzugsweise die Phasendifferenz $\Delta\varphi(i_L, u_{ind})$ zwischen dem berechneten Strom $i_L$ und der berechneten induzierten Spannung $u_{ind}$ berechnet, da diese Phasendifferenz genau die gesuchte Phaseninformation enthält. Um beispielsweise eine Phasenregelung zu realisieren, wird das Resonanzmesssystem bei einer Weiterentwicklung des erfindungsgemäßen Verfahrens zunächst mit einem Regler ausgestattet und dem Regler wird eine Differenz aus einer vorgegebenen Phasendifferenz $\Delta\varphi_{S1}$ und der Ist-Phasendifferenz $\Delta\varphi(i_L, u_{ind})$ als Regelabweichung e zur Verfügung gestellt, wobei der Regler dann ein Reglerausgangssignal $u_1$ zur Ansteuerung der elektrischen Stelleinrichtung erzeugt.

Bei einer weiteren bevorzugten Ausgestaltung des Verfahrens ist vorgesehen, dass das Resonanzmesssystem zusätzlich mit einem Schwingungsaufnehmer ausgestattet wird, der die angeregte Schwingung des Schwingelements erfasst und als wenigstens ein Ausgangssignal y ausgibt, wobei bevorzugt aus dem Ausgangssignal - sofern dies nicht ohnehin schon ein Geschwindigkeitssignal ist - mittelbar eine Aufnehmer-Geschwindigkeit $v_y$ ermittelt wird, zumindest jedoch hinsichtlich der Phase für die Geschwindigkeit des Schwingelements. Durch diese Maßnahme ist es dann möglich, die induzierte Spannung $u_{ind}$ und die Aufnehmer-Geschwindigkeit $v_y$ zumindest hinsichtlich ihrer Phase miteinander zu vergleichen, wobei beispielsweise bei Überschreitung einer vorgegebenen maximalen Phasenabweichung ein Störsignal ausgegeben wird, da offenkundig ein Fehler vorliegt, wodurch eine Diagnosemöglichkeit für das Resonanzmesssystem durch eine Redundanz geschaffen wird, die ohne zusätzlichen gerätetechnischen Aufwand realisiert werden kann.

In einer alternativen Variante des Verfahrens kann auch die Phasendifferenz $\Delta\varphi(i_L, v_y)$ zwischen dem berechneten Strom $i_L$ und der Aufnehmer-Geschwindigkeit $v_y$ berechnet werden, was möglicherweise dann von Vorteil ist, wenn die Aufnehmer-Geschwindigkeit $v_y$ eine höhere Güte hat als die berechnete induzierte Spannung $u_{ind}$. Dann bietet es sich an, dem zusätzlich vorgesehenen Regler eine Differenz aus einer wiederum vorgegebenen Phasendifferenz $\Delta\varphi_{S1}$ und der Phasendifferenz $\Delta\varphi(i_L, v_y)$ als Regelabweichung e zur Verfügung zu stellen, wobei der Regler dann ein Reglerausgangssignal $u_1$ zur Ansteuerung der elektrischen Stelleinrichtung erzeugt. Die vorgegebene Phasendifferenz wird dann - wie prinzipiell aus dem Stand der Technik für Phasenregelkreise bekannt - so gewählt, dass der gewünschte Betriebszustand des Resonanzmesssystems eingeregelt wird, bei Coriolis-Massedurchflussmessgeräten beispielswei-se $\Delta\varphi_{S1} = 0°$ für den Resonanzfall und $\Delta\varphi_{S1}, = +-45°$ zur frequenzselektiven Parameteridentifikation.

Die Erfindung betrifft darüber hinaus auch ein Resonanzmesssystem, insbesondere ein Coriolis-Massedurchflussmessgerät, wobei das Resonanzmesssystem wenigstens einen Regler, wenigstens eine elektrische Stelleinrichtung, wenigstens einen elektromagnetischen Antrieb als Schwingungserzeuger und wenigstens ein Schwingelement aufweist, wobei im Betrieb des Resonanzmesssystems der Regler ein Reglerausgangssignal $u_1$ zur Ansteuerung der elektrischen Stelleinrichtung erzeugt, die elektrische Stelleinrichtung ein elektrisches Anregungssignal $u_2$ zur Anregung des elektroma-gnetischen Antriebs bereitstellt, der elektromagnetische Antrieb das Schwingelement zur Schwingung in wenigstens einer Eigenform anregt, wobei ein zumindest das Schwingelement abbildendes mathematisches Modell des Resonanzmesssystems von einer Recheneinheit berechnet wird und Parameter des mathematischen Modells durch geeignete Anregung des Schwingelements und Auswertung des mathematischen Modells identifiziert werden und die identifizierten Parameter und/oder davon abgeleitete Größen zum Betreiben des Resonanzmesssystems herangezogen werden, wobei ein Regelkreis so implementiert ist, dass es das zuvor beschriebene Verfahren und die Varianten des vorbeschriebenen Verfahrens ausführt. Die Implementierung des Verfahrens auf dem Resonanzmesssystem geschieht mit einer Recheneinheit, beispielsweise mit einem digitalen Signalprozessor, der den Vorteil hat, viele der benötigten Elemente wie A/D-Wandler, D/A-Wandler, Multiplexer und auch Funktionen zur Signalverarbeitung bereits aufzuweisen.

Im Einzelnen gibt es nun verschiedene Möglichkeiten, das erfindungsgemäße Verfahren und das erfindungsgemäße Resonanzmesssystem auszugestalten und weiterzubilden. Dazu wird verwiesen auf die den Patentansprüchen und 1 und 11 nachgeordneten Patentansprüche und auf die Beschreibung bevorzugter Ausführungsbeispiele in Verbindung mit der Zeichnung. In der Zeichnung zeigen

Fig. 1    schematisch die Struktur eines Resonanzmesssystems in Form eines Coriolis-Massedurchflussmessgeräts, wie es aus dem Stand der Technik bekannt ist, wie es aber auch für das erfindungsgemäße Verfahren Verwendung finden könnte,

Fig. 2    das Ersatzschaltbild des mathematischen Modells eines elektromagnetischen Antriebs und gekoppeltem Schwingelement in Form eines Messrohres,

Fig. 3   das Ausführungsbeispiel eines erfindungsgemäßen Verfahrens zum Betrieb eines Resonanzmesssystems in Blockschaltbilddarstellung und

Fig. 4   ein erweitertes Ausführungsbeispiel des erfindungsgemäßen Verfahrens zum Betrieb eines Resonanzmesssystems, ebenfalls in Blockschaltbilddarstellung.

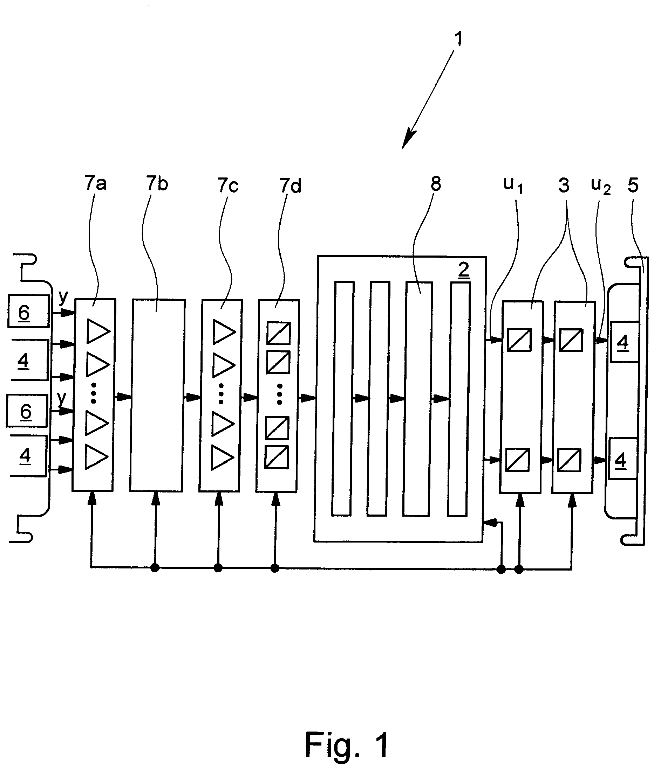

Fig. 1 zeigt ein Resonanzmesssystem 1 in Form eines Coriolis-Massedurchflussmessgeräts, wobei das Resonanzmesssystem 1 einen in einem Signalprozessor implementierten Regler 2, eine elektrische Stelleinrichtung 3 und einen elektromagnetischen Antrieb 4 als Schwingungserzeuger aufweist.

Der elektromagnetische Antrieb 4 hat die Aufgabe, ein Schwingelement 5, vorliegend ein mit einem Medium durchströmbares Messrohr, zu einer Schwingung in einer Eigenform anzuregen. Je nach Art der Eigenform ist dazu lediglich ein einziger elektromagnetischer Antrieb 4 erforderlich, sollen auch höhere Moden angeregt werden, können auch zwei oder mehr elektromagnetische Antriebe 4 erforderlich sein; dies ist für das nachfolgend beschriebene Verfahren zum Betrieb des Resonanzmesssystems 1 nicht von Bedeutung.

In Fig. 1 ist das Resonanzmesssystem 1 in Form des Coriolis-Massedurchflussmessgeräts zweigeteilt dargestellt. Das tatsächlich eine Einheit bildende Coriolis-Massedurchflussmessgerät endet zu einer Hälfte am rechten Bildrand der Figur und beginnt aus Gründen der übersichtlichen Darstellung mit der anderen Hälfte wieder am linken Bildrand der Figur. Dort ist zu erkennen, dass das Resonanzmesssystem 1 ferner auch Schwingungsaufnehmer 6 aufweist, die ein Ausgangssignal y ausgeben, vorliegend in Form eines Geschwindigkeitssignals y, das Auskunft über die Geschwindigkeit der Messrohrbewegung, also des Schwingelements 5, gibt. Der Schwingungsaufnehmer 6 ist zur Durchführung des nachfolgend dargestellten Verfahrens nicht zwingend erforderlich. An die Schwingungsaufnehmer 6 schließt sich eine Mehrzahl von Übertragungselementen an, die im Wesentlichen der Signalaufbereitung dienen, wie beispielsweise eine aus Verstärkern bestehende Anpassungselektronik 7a, ein Hardwaremultiplexer 7b zur Realisierung verschiedener umschaltbarer Messkanäle, eine weitere Anpassungselektronik 7c und ein Analog/Digital-Wandler 7d, der die analogen gemessenen Signale dem Regler 2 in Form digitaler Signale wieder zuführt. Der Regler 2 erzeugt ein Reglerausgangssignal $u_1$ zur Ansteuerung der elektrischen Stelleinrichtung 3, und die elektrische Stelleinrichtung 3 erzeugt nachfolgend ein elektrisches Anregungssignal $u_2$ zur Anregung des elektromagnetischen Antriebs 4.
Es sind verschiedene Verfahren bekannt, bei denen ein zumindest das Schwingelement 5 abbildendes mathematisches Modell 8 des Resonanzmesssystems 1 aufgestellt wird und Parameter des mathematischen Modells 8 durch geeignete Anregungen des Schwingelements 5 und Auswertung des mathematischen Modells 8 identifiziert werden und die identifizierten Parameter und/oder davon abgeleitete Größen zum Betreiben des Resonanzmesssystems 1 herangezogen werden. Das mathematische Modell 8 ist in Fig. 1 als Bestandteil des Reglers 2 dargestellt, wobei alle Verfahren zum Betreiben des Coriolis-Massedurchflussmessgeräts praktisch in Form von Programmen auf einer oder mehreren Recheneinheiten implementiert sind.

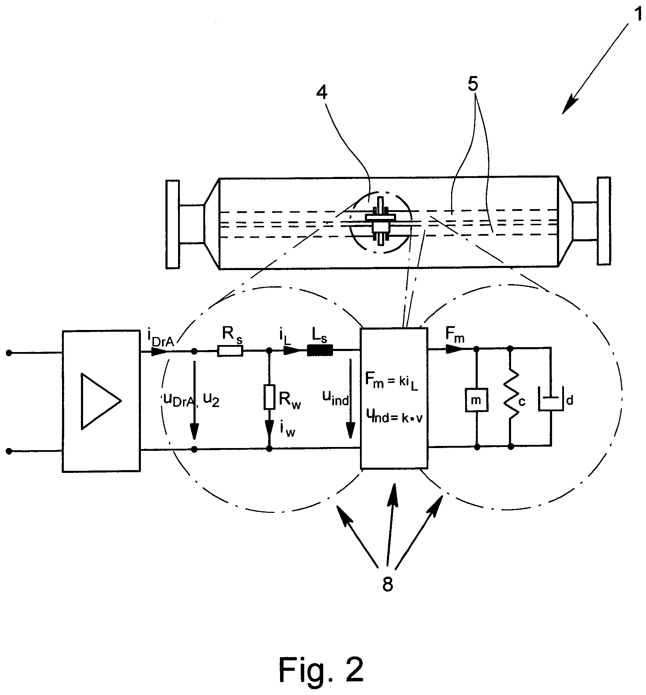

In Fig. 2 ist in Form eines Ersatzschaltbildes das erfindungsgemäße Verfahren zur Einstellung des Arbeitspunktes des als Coriolis-Massedurchflussmessgerät ausgebildeten Resonanzmesssystems 1 dargestellt. Im oberen Abschnitt der Fig. 2 ist zunächst ein Coriolis-Massedurchflussmessgerät als Resonanzmesssystem 1 skizziert, wobei zwei Messrohre als Schwingelement 5 angedeutet sind. Ferner ist angedeutet ein elektromagnetischer Antrieb 4, mit dem die Messrohre gegeneinander ausgelenkt werden können und so zur Schwingung angeregt werden. Im unteren Teil der Fig. 2 ist das realisierte Ersatzschaltbild für den elektromagnetischen Antrieb 4 - linke Seite - und für das mit dem Medium wechselwirkende Schwingelement 5 - rechte Seite - dargestellt, so dass der elektromagnetische Antrieb 4 und das Schwingelement 5 insgesamt mit dem mathematischen Modell 8 in Form des Ersatzschaltbildes abgebildet sind. Ferner ist dargestellt, dass die elektrische Stelleinrichtung 3 ein elektrisches Anregungssignal $u_2$ erzeugt zur Anregung des elektromagnetischen Antriebs 4.

Der durch das elektrische Anregungssignal $u_2$ bewirkte Antrieb-Klemmenstrom $i_{DrA}$ und die durch das elektrische Anregungssignal $u_2$ bewirkte Antrieb-Klemmenspannung $u_{DrA}$ des elektromagnetischen Antriebs 4 werden durch Messungen erfasst, was hier im Einzelnen nicht dargestellt ist, wobei das elektrische Anregungssignal $u_2$ mit der Antrieb-Klemmenspannung $u_{DrA}$ identisch ist, da es sich bei der elektrischen Stelleinrichtung 3 um einen spannungsgesteuerten Spannungswandler handelt. Der Antrieb-Klemmenstrom $i_{DrA}$ kann beispielsweise durch den Spannungsabfall an einem ohmschen Widerstand abgegriffen werden, die Antrieb-Klemmenspannung $u_{DrA}$ kann direkt von einem analogen Messeingang eines digitalen Signalprozessors hochohmig erfasst werden oder von einem separaten AnaloglDigital-Wandler digitalisiert werden.

Im Gegensatz zu anderen aus dem Stand der Technik bekannten mathematischen Modellen bildet das mathematische Modell 8 auch die physikalischen Eigenschaften des elektromagnetischen Antriebs 4 nach, so dass bisher unberücksichtigte Effekte des elektromagnetischen Antriebs 4 in die Berechnung mit einbezogen werden können. Im vorliegenden Fall werden die Parameter des elektromagnetischen Antriebs 4 und des Schwingelements 5 durch Auswertung des mathematischen Modells 8 mit dem messtechnisch erfassten Antrieb-Klemmenstrom $i_{DrA}$ und mit der erfassten Antrieb-Klemmenspannung $u_{DrA}$ des elektromagnetischen Antriebs 4 identifiziert.

Aus dem in Fig. 2 dargestellten mathematischen Modell 8 in Form eines Ersatzschaltbildes ist ersichtlich, dass das mathematische Modell 8 den elektromagnetischen Antrieb 4 und das mit dem Medium wechselwirkende Schwingelement 5 insgesamt als Last der elektrischen Stelleinrichtung 3 abbildet, wobei die Last dem Verhältnis aus der Antrieb-Klemmenspannung $u_{DrA}$ und dem Antrieb-Klemmenstrom $i_{DrA}$ entspricht. Es gilt:

$$Z(j\omega) = \frac{U_{DrA}(j\omega)}{I_{DrA}(j\omega)} \qquad . \qquad\qquad (1)$$

In der vorgenannten gleichungsmäßigen Beschreibung wird davon ausgegangen, dass das elektrische Anregungssignal $u_2$ ein harmonisches Anregungssignal ist, so dass sich die komplexwertige Formulierung anbietet. Bei Betrachtung von Fig. 2 wird deutlich, dass der komplexe Widerstand insgesamt abhängig ist von den Eigenschaften des Schwingungserzeugers 4 (Induktivität der Spule, ohmscher Widerstand der Spule und Wirbelstromverluste), von den mechanischen Eigenschaften des Schwingelements 5 in Form der Messrohre und auch von den Eigenschaften des mit dem Schwingelement 5 wechselwirkenden Mediums, vorliegend von dem durch die Messrohre strömenden Medium. Der komplexe Widerstand ist also abhängig von elektrischen, mechanischen und strömungsmechanischen Eigenschaften des elektromagnetischen Antriebs 4 und des mit dem Medium wechselwirkenden Schwingelements 5.

In dem in Fig. 2 dargestellten Ersatzschaltbild haben die Ersatzgrößen insgesamt die folgende Bedeutung:

$u_{DrA}$ := Spannung am Ausgang des Leistungsverstärkers (Spannung an der Antriebsspule),

$i_{DrA}$ := Strom am Ausgang des Leistungsverstärkers (Strom durch die Antriebsspule),

$i_L$ := Strom durch die Ersatzinduktivität,

$k$ := Übertragungsbeiwert,

$R_S$ := Ohm'scher Widerstand der Antriebsspule,

$R_W$ := Wirbelstromverluste im elektromagnetischen Antrieb,

$L_S$ := Induktivität der Antriebsspule,

$u_{ind}$ := geschwindigkeitsproportionale Induktionsspannung an der Spule,

$v$ := Messrohrgeschwindigkeit,

$m$ := Schwingmasse der Messrohre und des Messmediums (effektiv schwingende Masse),

$c$ := Federsteifigkeit der Messrohre und des Messmediums (effektive Federsteifigkeit),

$d$ := Dämpfungskoeffizient der Messrohre und des Messmediums (prozessbedingte Dämpfung) und

$F_m$ := Antriebskraft.

Der Widerstand $R_S$ beschreibt den ohmschen Widerstand der von dem elektromagnetischen Antrieb 4 umfassten Antriebsspule. Der Widerstand $R_W$ beschreibt die Wirbelstromverluste im elektromagnetischen Schwingungserzeuger und die Induktivität der Antriebsspule wird durch $L_S$ beschrieben. Von besonderem Interesse ist für die Beurteilung des Bewegungszustandes des Resonanzmesssystems 1 die Phasenlage zwischen dem Strom $i_L$ durch die Induktivität $L_S$ und der Geschwindigkeit des Schwingelements 5. Der ausschließlich durch die Induktivität $L_S$ fließende Strom $i_L$ verursacht eine proportionale Kraftwirkung $F_m$ auf das Schwingelement 5. Aus dem Ersatzschaltbild gemäß Fig. 2 ist sofort ersichtlich, dass der Strom $i_L$ nicht in Phase sein muss zu dem Antrieb-Klemmenstrom $i_{DrA}$. Zur Berechnung der komplexen Last gemäß Gleichung (1) können aus Fig. 2 die folgenden Gleichungen abgeleitet werden:

$$u_{DrA} = R_S i_{DrA} + R_W i_W$$

$$u_{DrA} = R_S i_{DrA} + L_S \frac{di_L}{dt} + u_{ind}$$

$$i_{DrA} = i_L + i_W \tag{2}$$

$$F_m = m\dot{v} + dv + c \int v d\tau$$

$$F_m = k i_L$$

$$u_{ind} = kv$$

Durch den Übertragungsbeiwert k werden die mathematischen Teilmodelle für den elektromagnetischen Antrieb 4 und das Schwingelement 5 miteinander gekoppelt, wobei gleichermaßen eine Proportionalität existiert zwischen dem Strom $i_L$ durch die Spule im Ersatzschaltbild mit der Induktivität $L_S$ und der dadurch hervorgerufenen Kraftwirkung $F_m$ einerseits, wie andererseits zwischen der Geschwindigkeit v des Messrohrs als Schwingelement 5 und der dadurch erzeugten Rückwirkung in Form der induzierten Spannung $u_{ind}$. Da beide Wirkungen durch ein und denselben elektromagnetischen Antrieb 4 erzeugt werden, gilt für beide Gleichungen tatsächlich der gleiche Übertragungsbeiwert k. Der Übertragungsbeiwert k ist für die Bestimmung vieler interessierender Größen als absoluter Wert nicht zwingend erforderlich, weil häufig nur Relationen von Werten zueinander berücksichtigt werden, weil bestimmte Werte nur hinsichtlich ihrer Phasenlage von Interesse sind, weniger von ihrem Betrag her, und weil in der Praxis entsprechende Werte für k bei einer initialen Kalibrierung bestimmt werden können. Gleichwohl ist es natürlich möglich, für k einen genauen Wert anzugeben, wenngleich die Bestimmung auch einen gewissen messtechnischen Aufwand bedeutet.

In Abhängigkeit davon, ob die elektrische Stelleinrichtung 3 an ihrem Ausgang einen Strom oder eine Spannung treibt und demzufolge entweder der Antrieb-Klemmenstrom $i_{DrA}$ oder die Antrieb-Klemmenspannung $u_{DrA}$ als Ausgangsgröße einstellt, ergeben sich verschiedene Übertragungsfunktionen. Für den Fall, dass sich der Antrieb-Klemmenstrom $i_{DrA}$ als Reaktion auf eine von der elektrischen Stelleinrichtung gelieferte Antrieb-Klemmenspannung $u_{DrA}$ einstellt (U-U-Leistungsverstärker), ergibt sich als Leitwert im Bildbereich (Gleichung 3):

$$\frac{I_{DrA}}{U_{DrA}} = G =$$

$$\frac{1}{(R_S + R_W)} \cdot \frac{L_S m s^3 + (L_S d + R_W m)s^2 + (L_S c + R_W d + k^2)s + R_W c}{L_S m s^3 + \left(L_S d + (R_W \| R_S)m\right)s^2 + \left(L_S c + k^2 + (R_W \| R_S)d\right)s + (R_W \| R_S)c} \cdot$$

Für den Fall, dass die elektrische Stelleinrichtung 3 den Antrieb-Klemmenstrom $i_{DrA}$ treibt und sich die Antrieb-Klemmenspannung als Reaktion einstellt, ergibt sich für den komplexen Widerstand (elektrische Stelleinrichtung 3 arbeitet als U-I-Leistungsverstärker):

$$\frac{U_{DrA}}{I_{DrA}} = Z =$$

$$(R_S + R_W) \cdot \frac{L_S m s^3 + \left(L_S d + (R_W \| R_S)m\right)s^2 + \left(L_S c + k^2 + (R_W \| R_S)d\right)s + (R_W \| R_S)c}{L_S m s^3 + (L_S d + R_W m)s^2 + (L_S c + R_W d + k^2)s + R_W c} \cdot \tag{4}$$

Die beiden Übertragungsfunktionen beschreiben den komplexen Leitwert $\underline{G}$ bzw. den komplexen Widerstand $\underline{Z}$, mit dem die elektrische Stelleinrichtung 3 insgesamt, also elektrisch, mechanisch und strömungsmechanisch, belastet wird. Die Parameter der Übertragungsfunktionen können auf sehr unterschiedliche Weise identifiziert werden, beispielsweise indem die Übertragungsfunktionen bei verschiedenen Frequenzen betrachtet werden und bei diesen Frequenzen Messwerte für den Antrieb-Klemmenstrom $i_{DrA}$ und die Antrieb-Klemmenspannung $u_{DrA}$ erfasst und zur Auswertung der Gleichungen und damit des mathematischen Modells 8 verwendet werden.

Bei Anregung des Resonanzmesssystems mit einem Gleichsignal kann der ohmsche Widerstand der elektrischen Stelleinrichtung 3 bestimmt werden. Für $\omega=0$ folgt aus Gleichung (3) beispielsweise:

$$\frac{I_{DrA0}}{U_{DrA0}} = \frac{1}{(R_S + R_W)} \cdot \frac{R_W c}{(R_W \parallel R_S)c} = \frac{1}{R_S} \Rightarrow$$

$$R_S = \frac{U_{DrA0}}{I_{DrA0}} \tag{5}$$

Nachfolgend wird dargestellt, wie mit dem mathematischen Modell 8 resultierend aus Gleichung (3) unter Verwendung des erfassten Antrieb-Klemmenstroms $i_{DrA}$ und der erfassten Antrieb-Klemmenspannung $u_{DrA}$ die induzierte Spannung $u_{ind}$ und der Strom $i_L$ berechnet werden können. Dazu wird der elektromagnetische Antrieb 4 mit einer Frequenz angeregt, die sehr klein ist, insbesondere sehr viel kleiner ist als die erste Eigenfrequenz des Systems. Durch diese Maßnahme ist gewährleistet, dass die durch die Bewegung des Messrohrs in der Spule des elektromagnetischen Antriebs induzierte Spannung $u_{ind}$ praktisch vernachlässigbar ist, so dass gilt $u_{ind} = 0$; daraus folgt:

$$\frac{U_{DrA1}}{I_{DrA1}} = R_S + \frac{R_W \cdot j\omega_{Z1}L_S}{R_W + j\omega_{Z1}L_S} \Rightarrow$$

$$\frac{U_{DrA1}}{I_{DrA1}} - R_S = \frac{R_W \cdot j\omega_{Z1}L_S}{R_W + j\omega_{Z1}L_S} \Rightarrow \tag{6}$$

$$\frac{1}{\dfrac{U_{DrA1}}{I_{DrA1}} - R_S} = \frac{1}{j\omega_{Z1}L_S} + \frac{1}{R_W}$$

Mit der Vereinbarung $Z_1 = \dfrac{U_{DrA1}}{I_{DrA1}}, Z_{1R} = \mathrm{Re}\{Z_1\}, Z_{1I} = \mathrm{Im}\{Z_1\}$ folgt dann:

$$\frac{1}{\mathrm{Re}\{Z_1\} + j\,\mathrm{Im}\{Z_1\} - R_S} = \frac{1}{j\omega_{Z1}L_S} + \frac{1}{R_W}$$

$$\frac{\mathrm{Re}\{Z_1\} - R_S - j\,\mathrm{Im}\{Z_1\}}{(\mathrm{Re}\{Z_1\} - R_S)^2 + (\mathrm{Im}\{Z_1\})^2} = \frac{1}{j\omega_{Z1}L_S} + \frac{1}{R_W} \tag{7}$$

und damit zunächst Bestimmungsgleichungen für den ohmschen Widerstand $R_W$ zur Nachbildung von Wirbelstromverlusten und für die Induktivität $L_S$ der Spule des elektromagnetischen Antriebs:

$$R_W = \frac{(\mathrm{Re}\{Z_1\} - R_S)^2 + (\mathrm{Im}\{Z_1\})^2}{\mathrm{Re}\{Z_1\} - R_S}$$

$$L_S = \frac{1}{\omega_{Z1}} \cdot \frac{(\mathrm{Re}\{Z_1\} - R_S)^2 + (\mathrm{Im}\{Z_1\})^2}{\mathrm{Im}\{Z_1\}} \tag{8}$$

Sind die Parameter $R_S$, $R_W$ und $L_S$ wie oben vorgeschlagen bestimmt worden, lassen sich über die gemessene Antrieb-Klemmenspannung $u_{DrA}$ und den gemessenen Antrieb-Klemmenstrom $i_{DrA}$ die induzierte Spannung $u_{ind}$ und der Strom $i_L$ durch die Spule des Ersatzschaltbildes berechnen:

$$i_L = (1 + \frac{R_S}{R_W})i_{DrA} - \frac{u_{DrA}}{R_W} \qquad (9)$$

und

$$u_{ind} = u_{DrA} - R_S i_{DrA} - L_S \frac{d}{dt}\left(i_{DrA} - \frac{u_{DrA} - R_S i_{DrA}}{R_W}\right). \qquad (10)$$

Zu berücksichtigen ist hier, dass es sich bei dem Strom $i_L$ und der induzierten Spannung $u_{ind}$ ebenfalls um Größen handelt, die in einer bestimmten Phasenbeziehung zueinander stehen. Bei einer harmonischen Anregung werden auch der Strom $i_L$ und die Spannung $u_{ind}$ wieder harmonische Größen sein, die mathematisch besonders einfach als komplexe Zeiger behandelt werden können. Aus den Gleichungen (9) und (10) folgen also die Phasenlage der induzierten Spannung - und damit die Phasenlage der Geschwindigkeit - und die Phasenlage des Stroms $i_L$ - und damit die Phasenlage der Kraftanregung -. Für die interssierende Übertragungsfunktion zwischen der Geschwindigkeit der Bewegung des Schwingelements 5 und der Antriebskraft $F_m$ ergibt sich wiederum für eine harmonische Anregung des Systems:

$$\left.\begin{array}{c} \dfrac{V}{F_m} = \dfrac{\dfrac{U_{ind}}{k}}{kI_L} = \dfrac{U_{ind}}{k^2 I_L} \\[4mm] \dfrac{V}{F_m} = \dfrac{\dfrac{1}{m}}{(j\omega)^2 + j\omega\dfrac{d}{m} + \dfrac{c}{m}} \end{array}\right\} \Rightarrow \qquad (11)$$

$$\frac{U_{ind}}{I_L} = \frac{\dfrac{1}{m}k^2 j\omega}{(j\omega)^2 + j\omega\dfrac{d}{m} + \dfrac{c}{m}}$$

Gleichung (11) gestattet die Bestimmung der mechanischen Systemparameter bei geeigneter Anregung des Resonanzmesssystems und unter Verwendung des berechneten Stroms $i_L$ und der berechneten induzierten Spannung $u_{ind}$. Wird die Phasenverschiebung $\Delta\varphi(i_L, u_{ind})$ auf 0 geregelt, wird das Schwingelement 5 bei seiner Eigenfrequenz $\omega_0 = c/m$ angeregt. Dann kann der Dämpfungskoeffizient d bestimmt werden durch:

$$d = \frac{I_L(j\omega_0)}{k^2 U_{ind}(j\omega_0)}. \qquad (12)$$

Wird das Resonanzmesssystem 1 in Form des dargestellten Coriolis-Massedurchflussmessgeräts so angeregt, dass die Phasenverschiebung $\Delta\varphi(u_{ind}, i_L)$ +45° beträgt, so wird das Schwingelement 5 definitionsgemäß bei einer Frequenz $\omega_{+45}$ angeregt. Aus Gleichung (11) lässt sich herleiten, dass sich die effektive Federsteifigkeit c dann über den berechneten Strom $i_L$ und die berechnete induzierte Spannung $u_{ind}$ - und damit über die gemessene Antrieb-Klemmenspannung $u_{DrA}$ und den gemessenen Antrieb-Klemmenstrom $i_{DrA}$ - wie folgt bestimmen lässt:

$$\left.\begin{array}{c} c = \dfrac{\omega_{+45}\omega_{01}^2}{\omega_{01}^2 - \omega_{+45}^2} d \\[4mm] c = \dfrac{\omega_{+45}\omega_{01}^2}{\omega_{01}^2 - \omega_{+45}^2} \cdot \dfrac{I_L(j\omega_0)}{k^2 U_{ind}(j\omega_0)} \end{array}\right. \qquad (13)$$

Ähnlich kann die effektiv schwingende Masse m berechnet werden, nämlich wie folgt:

$$m = \frac{\omega_{+45}}{\omega_{01}^2 - \omega_{+45}^2} \cdot \frac{I_L(j\omega_0)}{k^2 U_{ind}(j\omega_0)} \qquad (14)$$

Die hier exemplarisch bestimmten Parameter für die effektive Dämpfungskonstante d, die effektiv wirksame Federsteifigkeit c und die effektiv schwingende Masse m sind alle auf einen konstanten Faktor $k^2$ normiert. Wie bereits ausgeführt, lässt sich dieser Faktor bei Bedarf bestimmen, beispielsweise über den Einsatz einer Kompensationswaage.

Die hier dargestellte Vorgehensweise zur Parameteridentifikation ist beispielhaft zu verstehen, andere Vorgehensweisen sind ohne Weiteres denkbar. Das vorgestellte mathematische Modell 8 kann auch reduziert verwendet werden, beispielsweise ohne den Wirbelstromwiderstand $R_W$, das mathematische Modell 8 kann aber auch noch ergänzt werden. Zur Parameteridentifikation können auch andere Frequenzen und Phasenlagen verwendet werden, dies kann in einem quasi stationären Zustand geschehen, bei multifrequenter Anregung wie auch in einem dynamischen Betriebszustand.

Mit dem dargestellten Verfahren ist es sehr einfach, relevante Parameter des mathematischen Modells 8 zu identifizieren. Gemäß einer bevorzugten Ausgestaltung des Verfahrens ist vorgesehen, dass wenigstens einer der identifizierten Parameter des mathematischen Modells 8 des elektromagnetischen Antriebs 4 und des Schwingelements 5 zur Produktionsüberwachung und/oder zur Instandhaltung und/oder zur Bereitstellung von Diagnosedaten verwendet wird, wobei insbesondere für den verwendeten Parameter ein Toleranzband vorgegeben wird und ein Verlassen des Toleranzbandes signalisiert wird. Beispielsweise wird die Induktivität $L_S$ als der ausgewählte Parameter des elektromagnetischen Antriebs identifiziert und überprüft, ob sie innerhalb eines vorbestimmten Toleranzbandes liegt. Das Verlassen des Toleranzbandes kann beispielsweise als Indikator für einen Kurzschluss in der Spulenwicklung dienen. Ein anderes Beispiel ist die wirksame Federsteifigkeit c der ersten Eigenform des Schwingelements 5. Verlässt der identifizierte und von Temperatureinflüssen bereinigte Wert der Federsteifigkeit c das vorbestimmte Toleranzband, wird ein Alarm ausgegeben und die Instandhaltung beispielsweise über eine Erosion des Schwingelements 5 (Messrohr) benachrichtigt. Unter bestimmten Voraussetzungen kann sogar die aktuelle Wanddicke des Messrohrs bestimmt und zur Anzeige gebracht werden.

Darüber hinaus wird beispielsweise der identifizierte Wert der effektiven Federsteifigkeit c mit dem Wert der Federsteifigkeit $c_{cal}$ bei der Werkskalibrierung verglichen und die resultierende Differenz über eine vorbestimmte Funktion für die Korrektur der Messwerte für den Massedurchfluss und für die Fluiddichte verwendet. Dabei können auch die Messwerte der etwaig vorhandenen Temperatursensoren und/oder Dehnungsmessstreifen berücksichtigt werden, um die Messunsicherheit der Messwerte für den Massedurchfluss und für die Fluiddichte zu reduzieren; die Kombination verschiedener Korrekturverfahren ist ebenfalls eine bevorzugte Realisierung. Ein weiteres Beispiel ist die Identifizierung des Dämpfungskoeffizienten d und dessen Varianz. Diese Werte können zur Detektion und Korrektur einer mehrphasigen Strömung verwendet werden.

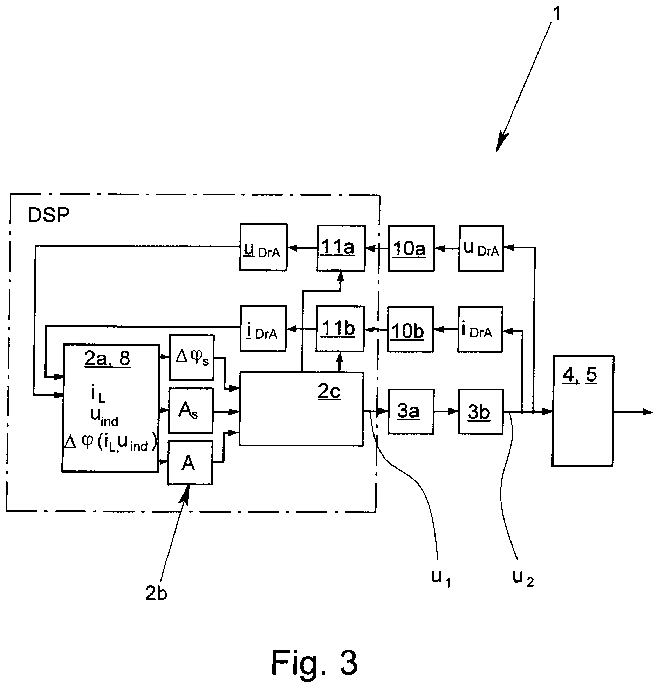

In Fig. 3 ist ein Resonanzmesssystem 1 in Form eines Coriolis-Massedurchflussmessgeräts dargestellt, wobei das Resonanzmesssystem 1 einen in einem digitalen Signalprozessor (DSP) implementierten Regler 2 aufweist sowie eine elektrische Stelleinrichtung 3 mit einem Digital/Analog-Wandler 3a und einer spannungsgesteuerten Spannungsquelle 3b als Leistungsteil. Der elektromagnetische Antrieb 4 weist eine Spule auf, die das Schwingelement 5 auslenkt und zu Schwingungen anregt. In dem dargestellten Ausführungsbeispiel ist das von der elektrichen Stelleinrichtung 3 erzeugte elektrische Anregungssignal $u_2$ eine Spannung, die gleich der Antrieb-Klemmenspannung $u_{DrA}$ des elektromagnetischen Antriebs 4 ist. Der Antrieb-Klemmenstrom $i_{DrA}$ stellt sich folgerichtig nach Maßgabe der aufgeprägten Spannung $u_{DrA}$, nach Maßgabe der Parameter des elektromagnetischen Antriebs 4 und des Schwingelements 5 sowie nach Maßgabe des Bewegungszustandes des Schwingelements 5 in Zusammenhang mit dem Medium ein. Die Antrieb-Klemmenspannung $u_{DrA}$ und der Antrieb-Klemmenstrom $i_{DrA}$ werden jedenfalls messtechnisch erfasst und mit Analog/Digital-Wandlern 10a, 10b umgesetzt.

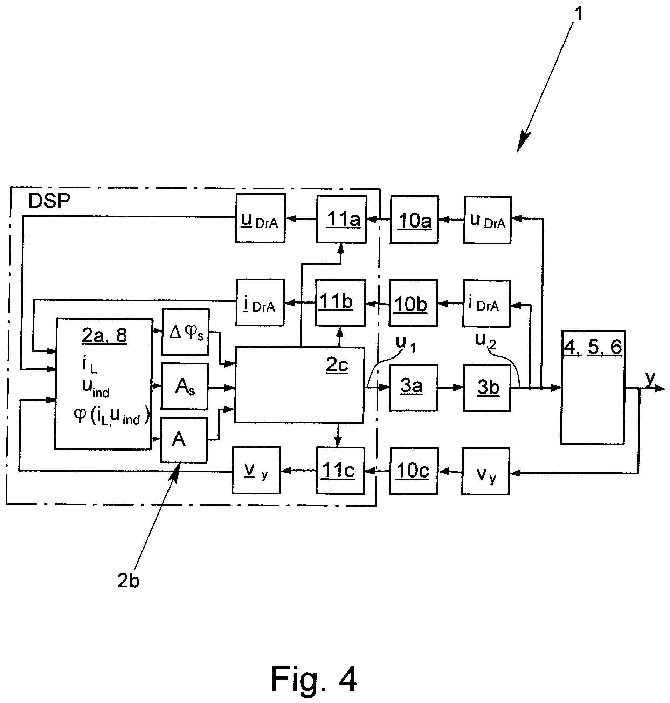

In der Fig. 3 wie auch in der Fig. 4 ist der Regler 2 zergliedert dargestellt. In dem Reglerteil 2a ist das mathematische Modell 8 hinterlegt, so dass hier alle das Modell 8 betreffende Berechnungen stattfinden können. In den Reglerteilen 2b sind die eigentlichen Regler implementiert, ganz oben beispielsweise für die Phasenregelung, in der Mitte für die Amplitudenregelung und unten für die Amplitudensteuerung. Ausgänge der Regler 2b sind Stellgrößen, die von dem darauffolgenden Signalgenerator 2c umgesetzt werden. Zur Anregung des Schwingelements 5 werden in dem Signalgenerator 2c zunächst zwei orthogonale harmonische Anregungssignale generiert, aus denen zusammen das Reglerausgangssignal $u_1$ erzeugt wird. Die ebenfalls harmonischen Messgrößen, die über die Analog/DigitalWandler 10a, 10b dem DSP wieder zugeführt werden, werden in den Demodulatoren 11a, 11b mit Hilfe der orthogonalen Basissignale des Signalgenerators 2c in Signalkomponenten zerlegt, die die Bestimmung der Phasenlage der Signale in Bezug auf das Basissignal gestatten, so dass nach der Demodulation eine Phaseninformation bezogen auf das Ausgangssignal des Signalgenerators 2c vorliegt. Die nach Betrag und Phase bekannte Antrieb-Klemmspannung $u_{DrA}$ und der Antrieb-Klemmenstrom $i_{DrA}$ werden dann durch Auswertung der Modellgleichungenb des mathematischen Modells 8 dazu verwendet, den Spulenstrom $i_L$ und die induzierte Spannung $u_{ind}$ sowie deren Phasenlage zueinander zu berechnen.

Das Resonanzmesssystem 1 gemäß Fig. 4 weist gegenüber dem Resonanzmesssystem nach Fig. 3 auch einen Schwingungsaufnehmer 6 auf, der die Auslenkung des Schwingelements 5 messtechnisch erfasst und als Ausgangssignal y ausgibt. Aus der Auslenkung wird dann das Geschwindigkeitssignal $v_y$ ermittelt - sofern es nicht schon unmittelbar das Ausgangssignal des Schwingungsaufnehmers 6 ist - und das Geschwindigkeitssignal $v_y$ wird nachfolgend durch den Analog/DigitalWandler 10c digitalisiert und dem DSP zugeleitet. Auch hier wird das Geschwindigkeitssignal durch einen Demodulator 11c in Bezug auf das Basissignal $u_1$ demoduliert, so dass die Phase bezüglich dieses Signals bekannt ist. Im Unterschied zu aus dem Stand der Technik bekannten Resonanzmesssystemen wird bei dem in den Figuren 3 und 4 dargestellten Resonanzmesssystem 1 ein Schwingungsaufnehmer 6 nicht zwingend benötigt, da die Geschwindigkeitsinformation aus der berechneten induzierten Spannung $u_{ind}$ gewonnen werden kann. Die zusätzliche Information über das Geschwindigkeitssignal $v_y$ von einem zusätzlichen Schwingungsaufnehmer 6 kann dazu verwendet werden, die auf zwei verschiedenen Wegen gewonnenen Geschwindigkeitsinformationen gegeneinander abzugleichen. Im Falle einer außerhalb eines Toleranzbandes liegenden Abweichung wird ein Fehlersignal ausgegeben.

**Patentansprüche**

1. Verfahren zur Einstellung des Arbeitspunktes eines als Coriolis-Massedurchflussmessgerät ausgebildeten Resonanzmesssystems (1), wobei das Resonanzmesssystem (1) wenigstens eine elektrische Stelleinrichtung (3), wenigstens einen elektromagnetischen Antrieb (4) mit einer Antriebsspule als Schwingungserzeuger und wenigstens ein mit einem Medium wechselwirkendes Schwingelement (5) umfasst, die elektrische Stelleinrichtung (3) ein elektrisches Anregungssignal ($u_2$) zur Anregung des elektromagnetischen Antriebs (4) bereitstellt, der elektromagnetische Antrieb (4) das Schwingelement (5) zur Schwingung in wenigstens einer Eigenform anregt, wobei ein zumindest das Schwingelement (5) abbildendes mathematisches Modell (8) des Resonanzmesssystems (1) aufgestellt wird und Parameter des mathematischen Modells (8) durch geeignete Anregung des Schwingelements (5) und Auswertung des mathematischen Modells (8) identifiziert werden und die identifizierten Parameter und/oder davon abgeleitete Größen zur Einstellung des Arbeitspunktes des Resonanzmesssystems (1) herangezogen werden,

   **dadurch gekennzeichnet,**

   **dass** mit dem mathematischen Modell (8) zumindest der elektromagnetische Antrieb (4) und das mit dem Medium wechselwirkende Schwingelement (5) abgebildet wird, dass der durch das elektrische Anregungssignal $u_2$ bewirkte Antrieb-Klemmenstrom $i_{DrA}$ und die durch das elektrische Anregungssignal $u_2$ bewirkte Antrieb-Klemmenspannung $u_{DrA}$ des elektromagnetischen Antriebs (4) durch Messung erfasst werden und dass die Parameter des elektromagnetischen Antriebs (4) und des Schwingelements (5) zumindest teilweise durch Auswertung des mathematischen Modells (8) mit dem erfassten Antrieb-Klemmenstrom $i_{DrA}$ und mit der erfassten Antrieb-Klemmenspannung $u_{DrA}$ des elektromagnetischen Antriebs (4) identifiziert werden und dass zumindest mit dem parametrierten mathematischen Modell (8) für den elektromagnetischen Antrieb (4) unter Verwendung des erfassten Antrieb-Klemmenstroms $i_{DrA}$ und der erfassten Antrieb-Klemmenspannung $u_{DrA}$ die induzierte Spannung $u_{ind}$ und der Strom $i_L$ der Antriebsspule zumindest hinsichtlich der Phase berechnet werden, insbesondere die Phasendifferenz $\Delta\varphi(i_L, u_{ind})$ zwischen dem Strom $i_L$ und der induzierten Spannung $u_{ind}$ berechnet wird..

2. Verfahren nach Anspruch 1, **dadurch gekennzeichnet, dass** das mathematische Modell (8) den elektromagnetischen Antrieb (4) und das mit dem Medium wechselwirkende Schwingelement (5) insgesamt als Last der elektrischen Stelleinrichtung (3) abbildet, wobei die Last dem Verhältnis aus der Antrieb-Klemmenspannung $u_{DrA}$ und dem Antrieb-Klemmenstrom $i_{DrA}$ entspricht.

3. Verfahren nach Anspruch 1 oder 2, **dadurch gekennzeichnet, dass** das mathematische Modell (8) als Parameter des elektromagnetischen Antriebs (4) die Induktivität $L_S$ einer Antriebsspule, den ohmschen Widerstand $R_S$ der Antriebsspule, insbesondere auch einen ohmschen Widerstand $R_W$ zur Nachbildung von Wirbelstromverlusten im elektromagnetischen Antrieb (4) umfasst, dass das mathematische Modell (8) als Parameter des Schwingelements (5) die effektive Schwingmasse m, die effektive Federsteifigkeit c und den effektiven Dämpfungskoeffizienten d umfasst, insbesondere wobei das mathematische Modell (8) wenigstens einen Übertragungsbeiwert k zur Beschreibung der Kopplung zwischen dem elektromagnetischen Antrieb (4) und dem Schwingelement (5) umfasst, wobei der Übertragungsbeiwert k vorzugsweise das Verhältnis zwischen der auf das Schwingelement (5) wirkenden Kraft $F_m$ und dem Strom $i_L$ durch die die Induktivität $L_S$ aufweisenden Antriebsspule und/oder das Verhältnis zwischen der geschwindigkeitsproportionalen Induktionsspannung $u_{ind}$ an der Antriebsspule und der Geschwindigkeit v des Schwingelements (5) angibt.

4. Verfahren nach Anspruch 3, **dadurch gekennzeichnet, dass** zur Identifikation des ohmschen Widerstandes $R_S$ der elektromagnetische Antrieb (4) mit einem Gleichsignal als elektrisches Anregungssignal $u_2$ beaufschlagt wird und/oder dass zur Bestimmung des ohmschen Widerstandes $R_W$ und der Induktivität $L_S$ der Antriebsspule der elektromagnetische Antrieb (4) mit einem Wechselsignal mit einer Frequenz , die sehr viel kleiner als die Eigenfrequenz im Resonanzbetriebsfall ist, als elektrisches Anregungssignal $u_2$ beaufschlagt wird.

5. Verfahren nach einem der Ansprüche 1 bis 4, **dadurch gekennzeichnet, dass** das Resonanzmesssystem (1) wenigstens einen Regler (2) aufweist, dem Regler eine Differenz aus einer vorgegebenen Phasendifferenz $\Delta\varphi_{S1}$, und der Phasendifferenz $\Delta\varphi(i_L, u_{ind})$ als Regelabweichung e zur Verfügung gestellt wird und der Regler (2) ein Reglerausgangssignal $u_1$ zur Ansteuerung der elektrischen Stelleinrichtung (3) erzeugt.

6. Verfahren nach einem der Ansprüche 1 bis 5, **dadurch gekennzeichnet, dass** das Resonanzmesssystem (1) einen Schwingungsaufnehmer (6) aufweist, der die angeregte Schwingung des Schwingelements (5) erfasst und als wenigstens ein Ausgangssignal y ausgibt, wobei insbesondere aus dem Ausgangssignal y direkt oder mittelbar eine Aufnehmer-Geschwindigkeit $v_y$ zumindest hinsichtlich der Phase für das Schwingelement (5) ermittelt wird.

7. Verfahren nach Anspruch 6, **dadurch gekennzeichnet, dass** die berechnete induzierte Spannung $u_{ind}$ und die Aufnehmer-Geschwindigkeit $v_y$ zumindest hinsichtlich ihrer Phase miteinander verglichen werden, insbesondere bei Überschreitung einer vorgegebenen Phasenabweichung ein Störsignal ausgegeben wird.

8. Verfahren wenigstens nach Anspruch 6, **dadurch gekennzeichnet, dass** die Phasendifferenz $\Delta\varphi(v_y, i_L)$ zwischen der Aufnehmer-Geschwindigkeit $v_y$ und dem berechneten Strom $i_L$ berechnet wird, insbesondere dem Regler (2) eine Differenz aus einer vorgegebenen Phasendifferenz $\Delta\varphi_{S1}$, und der Phasendifferenz $\Delta\varphi(v_y, i_L)$ als Regelabweichung e zur Verfügung gestellt wird und der Regler (2) ein Reglerausgangssignal $u_1$ zur Ansteuerung der elektrischen Stelleinrichtung (3) erzeugt.

9. Verfahren nach einem der Ansprüche 1 bis 8, **dadurch gekennzeichnet, dass** wenigstens einer der identifizierten Parameter des mathematischen Modells (8) des elektromagnetischen Antriebs (4) und des Schwingelements (5) zur Produktionsüberwachung und/oder zur Instandhaltung und/oder zur Bereitstellung von Diagnosedaten verwendet wird, insbesondere wobei für den verwendeten Parameter ein Toleranzband vorgegeben wird und ein Verlassen des Toleranzbandes signalisiert wird.

10. Verfahren nach einem der Ansprüche 1 bis 9, **dadurch gekennzeichnet, dass** zur Ermittlung der Phasenlage $\varphi(i_{DrA})$ des Antrieb-Klemmenstroms $i_{DrA}$ und/oder zur Ermittlung der Phasenlage $\varphi(u_{DrA})$ der Antrieb-Klemmenspannung $u_{DrA}$ von dem Regler (2) als Reglerausgangssignal $u_1$ ein harmonisches Basissignal erzeugt wird, wobei die jeweilige Phasenlage $\varphi(i_{DrA})$, $\varphi(u_{DrA})$ durch Demodulation des jeweils interessierenden Signals ($i_{DrA}$, $u_{DrA}$) mit dem harmonischen Basissignal und einem von dem Regler (2) bereitgestellten dazu orthogonalen weiteren harmonischen Basissignal ermittelt wird.

11. Als Coriolis-Massedurchflussmessgerät ausgebildetes Resonanzmesssystem (1), wobei das Resonanzmesssystem (1) wenigstens einen Regler (2), wenigstens eine elektrische Stelleinrichtung (3), wenigstens einen elektromagnetischen Antrieb (4) mit einer Antriebsspule als Schwingungserzeuger und wenigstens ein Schwingelement (5) aufweist, wobei im Betrieb des Resonanzmesssystems (1) der Regler (2) ein Reglerausgangssignal $u_1$ zur Ansteuerung der elektrischen Stelleinrichtung (3) erzeugt, die elektrische Stelleinrichtung (3) ein elektrisches Anregungssignal $u_2$ zur Anregung des elektromagnetischen Antriebs (4) bereitstellt, der elektromagnetische Antrieb (4) das Schwingelement (5) zur Schwingung in wenigstens einer Eigenform anregt, wobei ein zumindest das Schwingelement (5) abbildendes mathematisches Modell (8) des Resonanzmesssystems (1) von einer Recheneinheit berechnet wird und Parameter des mathematischen Modells (8) durch geeignete Anregung des Schwingelements (5) und Auswertung des mathematischen Modells (8) identifiziert werden und die identifizierten Parameter und/oder davon abgeleitete Größen zur Einstellung des Arbeitspunktes des Resonanzmesssystems (1) herangezogen werden, **dadurch gekennzeichnet, dass** ein Regelkreis so implementiert ist, dass das Verfahren gemäß einem der Ansprüche 1 bis 8 von dem Resonanzmesssystem (1) konkret ausführbar ist.

12. Resonanzmesssystem (1) nach Anspruch 11, **dadurch gekennzeichnet, dass** die elektrische Stelleinrichtung (3) ein spannungsgesteuerter Spannungswandler ist.

**Claims**

1. Method for setting the working point of a resonance-measuring system (1) designed as Coriolis mass flowmeter, wherein the resonance-measuring system (1) comprises at least one electric setting device (3), at least one electromagnetic drive (4) with a drive coil as oscillation generator and at least one oscillating element (5) interacting with the medium, the electric setting device (3) provides an electrical excitation signal ($u_2$) for exciting the electromagnetic drive (4), the electromagnetic drive (4) excites the oscillating element (5) to oscillation in at least one natural mode, wherein a mathematical model (8) of the resonance-measuring system (1) imaging at least the oscillating element (5) is set up and parameters of the mathematical model (8) are identified using suitable excitation of the oscillating element (5) and evaluation of the mathematical model (8) and the identified parameters and/or variables derived from them are used for setting the working point of the resonance-measuring system (1), **characterized in
that** at least the electromagnetic drive (4) and the oscillating element (5) interacting with the medium is imaged by the mathematical model (8), that the drive terminal current $i_{DrA}$ caused by the electrical excitation signal $u_2$ and the drive terminal voltage $u_{DrA}$ of the electromagnetic drive (4) caused by the electrical excitation signal $u_2$ are determined by measurement, and that the parameters of the electromagnetic drive (4) and the oscillating element (5) are at least partially identified by evaluating the mathematical model (8) with the detected drive terminal current $i_{DrA}$ and with the detected drive terminal voltage $u_{DrA}$ of the electromagnetic drive (4), and that at least the induced voltage $u_{ind}$ and the current $i_L$ of the drive coil are calculated at least in view of the phase by means of the parameterized mathematical model (8) for the electromagnetic drive (4) using the detected drive terminal current $i_{DrA}$ and the detected drive terminal voltage $u_{DrA}$, in particular the phase difference $\Delta\varphi(i_L, u_{ind})$ between the current $i_L$ and the induced voltage $u_{ind}$ is calculated.

2. Method according to claim 1, **characterized in that** the mathematical model (8) images the electromagnetic drive (4) and the oscillating element (5) interacting with the medium overall as the load of the electric control device (3), wherein the load corresponds to the ratio of the drive terminal voltage $u_{DrA}$ and the drive terminal current $i_{DrA}$.

3. Method according to claim 1 or 2, **characterized in that** the mathematical model (8) comprises the inductance Ls of a drive coil, the ohmic resistance $R_S$ of the drive coil, in particular also an ohmic resistance $R_W$ for simulating eddy current losses in the electromagnetic drive (4) as the parameter of the electromagnetic drive (4), that the mathematical model (8) comprises the effective oscillating mass, the effective spring stiffness c and the effective damping coefficient d, in particular wherein the mathematical model (8) comprises at least one transmission coefficient k for describing the coupling between the electromagnetic drive (4) and the oscillating element (5), wherein the transmission coefficient k preferably indicates the ratio between the force $F_m$ acting on the oscillating element (5) and the current $i_L$ through the drive coils having the inductance Ls and/or indicates the ratio between the speed-proportional induction voltage $u_{ind}$ at the drive coil and the speed v of the oscillating element (5).

4. Method according to claim 3, **characterized in that**, in order to identify the ohmic resistance Rs, the electromagnetic drive (4) is impinged with a direct signal as electrical excitation signal $u_2$ and/or, in order to determine the ohmic resistance Rw and the inductor Ls of the drive coil, the electromagnetic drive (4) is impinged with an alternating signal as electrical excitation signal $u_2$ with a frequency which is very much smaller than the natural frequency in the case of resonance mode.

5. Method according to any one of claims 1 to 4, **characterized in that** the resonance-measuring system (1) has at least one controller (2), the controller is provided a difference between a predetermined phase difference $\Delta\varphi_{S1}$, and the phase difference $\Delta\varphi(v_y, i_L)$ as control deviation e, and the controller (2) generates a controller output signal $u_1$ for controlling the electric setting device (3).

6. Method according to one of the claims 1 to 5, **characterized in that** the resonance-measuring system (1) has an oscillation sensor (6) that detects the excited oscillation of the oscillating element (5) and emits it as at least one output signal y, wherein, in particular, a sensor speed $v_y$ is determined at least in view of the phase for the oscillating element (5) directly or indirectly from the output signal y.

7. Method according to Claim 6, **characterized in that** the calculated induced voltage $u_{ind}$ and the sensor speed $v_y$ are at least compared with one another in view of their phase, in particular a disturbance signal is output when a predetermined phase deviation is exceeded.

8. Method at least according to Claim 6, **characterized in that** the phase difference $\Delta\varphi(v_y, i_L)$ between the sensor speed $v_y$ and the calculated current $i_L$ is calculated, in particular the controller (2) is provided a difference between a predetermined phase difference $\Delta\varphi_{S1}$ and the phase difference $\Delta\varphi$ ($v_y$, $i_L$) as control deviation e, and the controller (2) generates a controller output signal $u_1$ for controlling the electric setting device (3).

9. Method according to any one of Claims 1 to 8, **characterized in that** at least one of the identified parameters of the mathematical model (8) of the electromagnetic drive (4) and of the oscillating element (5) is used for production monitoring and/or for maintenance and/or for providing diagnostic data, in particular wherein a tolerance band is specified for the parameter used and an exit from the tolerance band is signaled.

10. Method according to one of claims 1 to 9, **characterized in that** for determining the phase position $\varphi$ ($i_{DrA}$) of the drive terminal current $i_{DrA}$ and/or for determining the phase position $\varphi$ ($u_{DrA}$) of the drive terminal voltage $u_{DrA}$, a harmonic base signal is generated by the controller (2) as controller output signal $u_1$, wherein each phase position $\varphi$ ($i_{DrA}$), $\varphi$ ($u_{DrA}$) is determined by demodulation of the respective signal of interest ($i_{DrA}$, $u_{DrA}$) with the harmonic base signal and a further harmonic basic signal which is provided orthogonally to it by the controller (2).

11. A resonance-measuring system (1) designed as a Coriolis mass flowmeter, wherein the resonance-measuring system (1) comprises at least one controller (2), at least one electric setting device (3), at least one electromagnetic drive (4) with a drive coil as an oscillation generator and at least one oscillating element (5), wherein the controller (2) generates a controller output signal $u_1$ for controlling the electric setting device (3) during operation of the resonance-measuring system (1), the electric setting device (3) provides an electrical excitation signal $u_2$ for excitation of the electromagnetic drive (4), the electromagnetic drive (4) excites the oscillating element (5) to oscillation in at least one natural mode, wherein a mathematical model (8) of the resonance-measuring system (1) imaging at least the oscillating element (5) is calculated by a computing unit and parameters of the mathematical model (8) are identified by means of suitable excitation (5) and evaluation of the mathematical model (8) and the identified parameters and/or variables derived therefrom are used for setting the operating point of the resonance-measuring system (1)
**characterized in
that** a control circuit is implemented such that the method according to one of claims 1 to 8 can be specifically executed by the resonance-measuring system (1).

12. The resonance-measuring system (1) according to claim 11, **characterized in that** the electric setting device (3) is a voltage-controlled voltage transformer.


**Revendications**

1. Procédé d'ajustement du point de travail d'un système (1) de mesure par résonance configuré comme appareil de mesure de débit massique par effet Coriolis,
le système (1) de mesure par résonance comportant au moins un dispositif électrique de réglage (3), au moins un entraînement électromagnétique (4) doté d'une bobine d'entraînement servant d'oscillateur et au moins un élément oscillant (5) interagissant avec un fluide,
le dispositif électrique de réglage (3) délivrant un signal électrique d'excitation ($u_2$) qui excite l'entraînement électromagnétique (4),
l'entraînement électromagnétique (4) excitant l'élément oscillant (5) à osciller en au moins un mode propre,
un modèle mathématique (8) du système de résonance (1) représentant au moins l'élément oscillant (5) étant établi et des paramètres du modèle mathématique (8) étant identifiés par excitation appropriée de l'élément oscillant (5) et évaluation du modèle mathématique (8),
les paramètres identifiés et/ou des grandeurs qui en sont dérivées intervenant dans l'ajustement du point de travail du système (1) de mesure par résonance, **caractérisé en ce que**
au moins l'entraînement électromagnétique (4) et l'élément oscillant (5) interagissant avec le fluide sont représentés par le modèle mathématique (8),
**en ce que** le courant $i_{DrA}$ aux bornes d'entraînement produit par le signal électrique d'excitation $u_2$ et la tension $u_{DrA}$ aux bornes d'entraînement produite par le signal électrique d'excitation $u_2$ pour l'entraînement électromagnétique (4) sont saisis par mesure,
**en ce que** les paramètres de l'entraînement électromagnétique (4) et de l'élément oscillant (5) sont identifiés au moins en partie par évaluation du modèle mathématique (8), du courant $i_{DrA}$ saisi sur les bornes d'entraînement et de la tension $u_{DrA}$ saisie sur les bornes d'entraînement pour l'entraînement électromagnétique (4) et
**en ce qu'**au moins avec le modèle mathématique (8) paramétrisé pour l'entraînement électromagnétique (4), en recourant au courant $i_{DrA}$ saisi aux bornes d'entraînement et à la tension $u_{DrA}$ saisie aux bornes d'entraînement, la tension induite $u_{ind}$ et le courant $i_L$ de la bobine d'entraînement sont calculés au moins pour ce qui concerne leur phase et en particulier le déphasage $\Delta\varphi(i_L, u_{ind})$ entre le courant $i_L$ et la tension induite $u_{ind}$ est calculé.

2. Procédé selon la revendication 1, **caractérisé en ce que** le modèle mathématique (8) représente globalement l'entraînement électromagnétique (4) et l'élément oscillant (5) qui interagit avec le fluide sous la forme de la charge du dispositif électrique d'ajustement (3), la charge correspondant au rapport entre la tension $u_{DrA}$ aux bornes de l'entraînement et le courant $i_{DrA}$ aux bornes de l'entraînement.

3. Procédé selon les revendications 1 ou 2, **caractérisé en ce que** le modèle mathématique (8) comporte comme paramètres de l'entraînement électromagnétique (4) l'inductance $L_S$ d'une bobine d'entraînement, la résistance ohmique $R_S$ de la bobine d'entraînement, notamment aussi la résistance ohmique $R_W$ qui représente les pertes par courant de Foucauld dans l'entraînement électromagnétique (4), **en ce que** le modèle mathématique (8) comporte comme paramètre de l'élément oscillant (5) la masse oscillant efficace m, la rigidité élastique efficace c et le coefficient d'amortissement efficace d, le modèle mathématique (8) comprenant au moins un coefficient de transfert k qui décrit l'accouplement entre l'entraînement électromagnétique (4) et l'élément oscillant (5), le coefficient de transfert k indiquant de préférence le rapport entre la force $F_m$ qui agit sur l'élément oscillant (5) et le courant $i_L$ qui traverse la bobine d'entraînement qui présente l'inductance $L_S$ et/ou le rapport entre la tension d'inductance $u_{ind}$, proportionnelle à la vitesse, aux bornes de la bobine d'entraînement et la vitesse v de l'élément oscillant (5).

4. Procédé selon la revendication 3, **caractérisé en ce que** pour identifier la résistance ohmique $R_S$, un signal continu est appliqué sur l'entraînement électromagnétique (4) en tant que signal électrique d'excitation $u_2$ et/ou **en ce que** pour déterminer la résistance ohmique $R_W$ et l'inductance $L_S$ de la bobine d'entraînement, un signal alternatif d'une fréquence beaucoup plus basse sur la fréquence propre de résonance est appliqué comme signal électrique d'excitation $u_2$ sur l'entraînement électromagnétique (4).

5. Procédé selon l'une des revendications 1 à 4, **caractérisé en ce que** le système (1) de mesure par résonance présente au moins un régulateur (2) **en ce que** la différence entre un déphasage prédéterminé $\Delta\varphi_{s1}$ et le déphasage $\Delta\varphi(i_L, u_{ind})$ est appliquée comme écart de régulation e sur le régulateur, le régulateur (2) formant un signal $u_1$ de sortie de régulateur qui commande le dispositif électrique d'ajustement (3).

6. Procédé selon l'une des revendications 1 à 5, **caractérisé en ce que** le système (1) de mesure par résonance présente un enregistreur (6) de vibrations qui saisit les vibrations excitées sur l'élément oscillant (5) et les délivre en tant que signal ou signaux de sortie y, une vitesse $v_y$ d'enregistreur étant déterminée au moins pour la phase de l'élément oscillant (5), directement ou indirectement à partir du signal de sortie y.

7. Procédé selon la revendication 6, **caractérisé en ce que** la tension induite $u_{ind}$ calculée et la vitesse d'enregistrement $v_y$ sont comparées l'une à l'autre au moins en ce qui concerne leur phase, un signal d'erreur étant délivré en particulier lorsqu'un déphasage prédéterminé est dépassé.

8. Procédé selon au moins la revendication 6, **caractérisé en ce que** le déphase $\Delta\varphi(v_y, i_L)$ entre la vitesse d'enregistreur $v_y$ et le courant calculé $i_L$ est calculé, **en ce qu'**une différence entre un déphasage $\Delta\varphi s_1$ prédéterminé et le déphasage $\Delta\varphi(v_y, i_L)$ est appliquée comme écart de régulation e sur le régulateur (2) et **en ce que** le régulateur (2) forme un signal $u_1$ de sortie de régulateur qui commande le dispositif électrique d'ajustement (3).

9. Procédé selon l'une des revendications 1 à 8, **caractérisé en ce qu'**au moins l'un des paramètres qui ont été identifiés pour le modèle mathématique (8) de l'entraînement électromagnétique (4) et de l'élément oscillant (5) est utilisé pour la surveillance de production, la mise en service et/ou la préparation de données de diagnostic, une plage de tolérances étant prédéterminée pour les paramètres utilisés et une sortie hors de la plage de tolérances étant signalée.

10. Procédé selon l'une des revendications 1 à 9, **caractérisé en ce que** pour déterminer la phase $\varphi(i_{DrA})$ du courant $i_{DrA}$ aux bornes d'entraînement et/ou pour déterminer la phase $\varphi(u_{DrA})$ de la tension $u_{DrA}$ aux bornes d'entraînement, un signal harmonique de base est formé par le régulateur (2) comme signal $u_1$ de sortie de régulateur, la phase $\varphi(i_{DrA})$, $\varphi(u_{DrA})$ étant déterminée par démodulation du signal ($i_{DrA}$, $u_{DrA}$) concerné avec le signal harmonique de base et un autre signal harmonique de base préparé par le régulateur (2) et perpendiculaire au premier.

11. Système (1) de mesure par résonance configuré comme appareil de mesure de débit par effet Coriolis,

le système (1) de mesure par résonance comportant au moins un régulateur (2), au moins un dispositif électrique de réglage (3), au moins un entraînement électromagnétique (4) doté d'une bobine d'entraînement servant d'oscillateur et au moins un élément oscillant (5),

lors de fonctionnement du système (1) de mesure par résonance, le régulateur (2) délivrant un signal $u_1$ de sortie de régulateur qui commande le dispositif électrique de réglage (3),

le dispositif électrique de réglage (3) délivrant un signal électrique d'excitation ($u_2$) qui excite l'entraînement électromagnétique (4),

l'entraînement électromagnétique (4) excitant l'élément oscillant (5) à osciller en au moins un mode propre,

un modèle mathématique (8) du système de résonance (1) représentant au moins l'élément oscillant (5) étant calculé par une unité de calcul et des paramètres du modèle mathématique (8) étant identifiés par excitation appropriée de l'élément oscillant (5) et évaluation du modèle mathématique (8),

les paramètres identifiés et/ou des grandeurs qui en sont dérivées intervenant dans l'ajustement du point de travail du système (1) de mesure par résonance, **caractérisé en ce que**

un circuit de régulation tel que le procédé selon l'une des revendications 1 à 8 peut être mis en oeuvre concrètement par le système (1) de mesure par résonance est réalisé.

12. Système (1) de mesure par résonance selon la revendication 11, **caractérisé en ce que** le dispositif électrique d'ajustement (3) est un convertisseur de tension commandé par tension.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059920 A1

- DE 102005013770 A1